# EUROPÄISCHE PATENTSCHRIFT

(11) **EP 4 087 410 B1**
(45) Veröffentlichungstag und Bekanntmachung des Hinweises auf die Patenterteilung: **26.06.2024**
(21) Anmeldenummer: 21702856.2
(22) Anmeldetag: 11.01.2021
(51) Int. Cl.: A23G 1/00, A23G 1/20, A23G 1/24, A23G 3/02, A23P 30/10

(54) **VORRICHTUNG UND VERFAHREN ZUM HERSTELLEN EINES PRODUKTES**
DEVICE AND METHOD FOR PRODUCING A PRODUCT
DISPOSITIF ET PROCÉDÉ DE PRODUCTION DE PRODUIT

(30) Priorität: 10.01.2020 DE 102020100483
(43) Veröffentlichungstag der Anmeldung: 16.11.2022
(73) Patentinhaber: KNOBEL, Guido, 8268 Salenstein (CH)
(72) Erfinder: KNOBEL, Guido, 8268 Salenstein (CH)
(74) Vertreter: Patentanwälte und Rechtsanwalt Weiß, Arat & Partner mbB
(86) Internationale Anmeldenummer: PCT/EP2021/050350
(87) Internationale Veröffentlichungsnummer: WO 2021/140240

(56) Entgegenhaltungen:
- DE-A1- 2 117 635
- DE-A1-102005 017 537
- DE-C- 945 550
- DE-U1-202019 105 434

## Beschreibung

### Technisches Gebiet

Die vorliegende Erfindung betrifft eine Vorrichtung zum Herstellen eines Produktes, welches zumindest aus einer fliessfähigen Masse besteht, die in eine Form einfüllbar ist, wobei der Form eine Vibrier -bzw. Rütteleinrichtung zugeordnet und die Form auf einem Träger angeordnet ist, sowie ein Verfahren hierfür.

### Stand der Technik

Bei der Herstellung von Schokoladenartikel, beispielsweise von Schokoladentafeln oder Aussenschalen aus fetthaltigen, schokoladenähnlichen Massen ist es bekannt, dass entsprechende Formen und insbesondere Formhohlräume (Alveolen) mit temperierter Schokolade oder schokoladenähnlicher Masse befüllt werden. Dabei erstarrt die Masse unter Kristallisation zur Bildung der Aussenform der Schale von der Alveole aus einwärts, wobei die Alveole eine niedrigere Temperatur als die der temperierten Masse aufweist. Zum Ausformen von beispielsweise einer Schokoladenschale wird dann unmittelbar nach dem Einfüllen der Masse in die Alveole ein gekühlter Stempel in die Masse abgesenkt, in eingetauchter Stellung gehalten, so dass ein vorgegebenes Schalenvolumen zwischen dem Kühlkörper und der Alveole bestimmt wird.

Problematisch ist aber dabei die Vergleichmässigung der Schokoladenmasse. Die in die Alveole eingefüllte Masse ist nicht frei von Lufteinschlüssen, so dass sich in der Fettmasse mehr oder weniger grosse und mehr oder weniger gleichmässig verteilte Luftblasen bilden. Diese können schon in der temperierten Schokoladenmasse im Vorratsbehälter vor dem Einfüllen in die Alveole enthalten sein oder stammen aus der Umgebungsluft beim Einfüllen der Schokoladenmasse in die Alveole.

Sowohl Luftblasen als auch eine ungleichmässige Verteilung der Schokolade in der Alveole beeinträchtigen die Qualität des erzeugten Schokoladenartikels. Negativ sind z.B. uneinheitliche Schalendicke bis hin zu Löchern in der Schale, ungleichmässiger Schalenrand usw..

Um die ganze Masse zu vergleichmässigen und um insbesondere Lufteinschlüsse soweit wie möglich zu entfernen, ist es bekannt, dass diese so gefüllten Formen gerüttelt bzw. vibriert werden, was natürlich sowohl für die Herstellung einer Schokoladentafel als auch insbesondere für die Herstellung einer Schokoladenaussenschale mittels des oben erwähnten Stempels gilt.

Bereits schon sehr früh ist aus der DE 407 147 ein Verfahren und eine Einrichtung zum Entlüften getafelter Schokolade bekannt. Um von Luftblasen freie, glatte Schokoladentafeln, die durch Bröckeln nicht zerfallen, zu erhalten, wird die mit der Masse ausgegossene Form vor dem Erstarren und währenddessen im Allgemeinen auf sogenannten Klopftischen und -bändern, lebhaft erschüttert, wobei die Luft entweicht und die Schokolade durch Zusammensickern gut die Form ausfüllt. Diese Klopfbehandlung ist bekanntlich mit ohrenbetäubendem Lärm verbunden.

Auch die DE 705 032 beschreibt eine mit Magneten versehene Rüttelvorrichtung für mit Schokoladenmasse gefüllte, ungewendete oder gewendete Formen. Auch hier wird auf die Geräuschbildung aus dem Stand der Technik verwiesen, was nach dieser Erfindung durch entsprechende Magnetschienen vermieden werden soll.

In der DE 198 09 651 A1 ist eine gesamte Schokoladenanlage gezeigt, bei der eine Station zum Formenwechsel über eine Transfereinrichtung mit einem Streckenausgleich verbunden ist. An den Streckenausgleich schliesst ein Formenanwärmer an und an diesen ein Dosier- und Rüttelabschnitt, in dem die Schokoladenmasse in die Produktträger bildenden Formen gefüllt und anschliessend durch Rütteln homogenisiert wird.

Aus der DE 37 34 626 C1 ist eine Vorrichtung zum Rütteln von mit zähflüssiger Schokoladenmasse gefüllten flachen Giessformen bekannt. Die über einen Rütteltisch transportierten Giessformen werden von sich in Transportrichtung erstreckenden inneren und äusseren, balkenförmigen Rüttelelementen an definierten Stellen des Bodens mit der Rüttelbewegung beaufschlagt. Zu diesem Zweck weist der Boden der Giessformen quer zur Transportrichtung verlaufende Stege am vorderen und hinteren Rand und dazwischen auf. Im Steg des vorderen und hinteren Randes sind im Bereich eines Paares der balkenförmigen Rüttelelemente Aussparungen vorgesehen, so dass diese Rüttelelemente die Giessform im Bereich dieser Stege nicht, wohl aber im Bereich der mittleren Stege erfassen. Mit einer solchen Vorrichtung wird erreicht, dass die Schokoladenmasse gleichmässig in der Giessform verteilt wird.

Aus der DE 42 41 610 A1 ist bekannt, dass fliessfähige Schokoladenmassen recht zähflüssig sind und wenig Neigung zeigen, die Formen, in die sie eingefüllt werden, unter ausschliesslicher Wirkung der Schwerkraft gleichmässig auszufüllen. Durch Rütteln der Formen lässt sich die Wirkung der Schwerkraft verstärken. Zu diesem Zweck dienen sogenannte Klopfeinrichtungen. Im Gegensatz zu herkömmlichen Klopfeinrichtungen, die eine rotierende Unwucht aufweisen, sind bei der erfindungsgemässen Klopfeinrichtung Mittel vorgesehen, die die Formkästen während ihres Transportes durch die Vorrichtung periodisch anheben und auf eine harte Unterlage fallen lassen.

Die DE 916 619 beschreibt ein Verfahren und eine Vorrichtung zum ständigen Durchmischen einer in dünner Schicht durch eine Temperaturbeeinflussungszone geförderten Masse, vorzugsweise einer Schokoladenmasse. Dabei soll es auch vor allem zu einer Vergleichmässigung von Einlagen, wie beispielsweise Nüssen oder Rosinen, in der Schokoladenmasse kommen. Hierzu wird vorgeschlagen, auf die in dünner Schicht die Maschine durchströmende Schokoladenmasse schnelle Rüttelstösse mit einer senkrecht zur Stromrichtung gerichteten Stromkomponente auszuüben. Durch derartige Stösse wird eine intensive Mischwirkung unter den einzelnen Schokoladenmassenbestandteilen hervorgerufen, also eine Entmischung vor dem endgültigen Erstarren in derselben Weise verhindert, wie es beim Einrütteln von bereits in den Formen befindlichen Schokoladenmengen zur Herstellung von Schokoladenerzeugnissen in der einschlägigen Industrie üblich ist.

Neben der zur Stromrichtung senkrecht stehenden, die Mischung durch abwechselnde Verdichtung und Entlastung der Masse bewirkenden Komponente soll durch die Schrägrichtung der Rüttelstösse durch ein und dieselbe Vorrichtung auch noch eine in der Förderrichtung oder entgegengesetzt gerichtete Komponente wirksam werden, die dann entweder die Förderung der Masse allein bewirkt oder sie wenigstens unterstützen bzw. auch unterbrechen kann.

Weitere Rütteleinrichtungen sind beispielsweise aus der EP 1 050 216 oder der DE 38 39 440 C1 bekannt.

Die DE 945 550 C wiederum befasst sich mit einer Verbesserung von bekannten Rütteltischen für gefüllte Schokoladenformen, bei denen auf dem in Rüttelschwingungen versetzten Tischkörper elastische Führungs- und Einspannmittel verwendet worden sind, um die Schokoladenformen zwischen sich in der Schwingungsebene festzuhalten und harte Aufschläge in den Führungen des Tisches zu vermeiden. Es handelt sich dabei um einen besonderen Typ von mit sehr hohen Frequenzen arbeitenden Rütteltischen, bei denen wegen der hohen Frequenz auf den harten Aufschlag der Form nach einer auf sie ausgeübten Wurfbewegung auf die Unterlage oder eine Gegenfläche ohne Einbusse in der gewünschten Verteil- oder Stauchwirkung auf die Schokoladenmasse verzichtet werden kann. Es werden ausschliesslich in einer senkrechten Ebene ausgeführte Rüttelbewegungen beschrieben.

Die DE 10 2005 017 537 A1 betrifft eine Vorrichtung und Verfahren zum Überziehen von Nahrungsmittelartikeln mit fliessfähigen pastösen Massen. Es wird ein die Nahrungsmittelartikel förderndes Gitterband gezeigt, dessen förderaktiver Trum an einer Rütteleinrichtung vorbeigeführt ist, wobei die Rütteleinrichtung quer zur Fördereinrichtung des Gitterbandes verlaufende Querstreben aufweist, mittels denen das Gitterband auf und ab bewegbar ist. Dabei ist eine Rütteleinrichtung mit einer der Querstreben gekoppelt.

Die DE 21 17 635 A1 betrifft wiederum eine Vorrichtung zum Loslösen von Schokoladenartikeln oder ähnlichen Artikeln von den Wänden der Hohlräume in Formblechen. Dies allerdings ist eine nächste Stufe der Herstellung eines Schokoladenartikels nach der Homogenisierung entsprechend der vorliegenden Erfindung. Angedacht ist, dass in der Nähe des Transportbandes der Formbleche, im Anschluss an einen bekannten Kühlkanal, mindestens eine Klopfeinrichtung nach Art eines Vibrationshammers vorgesehen ist, die direkt auf das vorbeilaufende Formblech einwirkt. Es wird mit einem Vibrationshammer auf die Form geklopft, damit die fertigen Schokoladenartikel aus den Formen herausfallen können.

Aus der anmeldereigenen DE 20 2019 105 434 U ist eine Vorrichtung bekannt, bei der eine Form für Schokoladenartikel auf einem Transportband in einer Transportrichtung durch eine Rütteleinrichtung hindurch transportiert wird. Diese Rütteleinrichtung beaufschlagt einen Rütteltisch, der sich unterhalb des Transportbandes befindet. Durch den Rütteltisch werden entsprechende Vibrationen bzw. Stösse auf den Rütteltisch und über diesen auf die Form übertragen, so dass die fliessfähige Masse in den Alveolen homogenisiert werden kann.

### Aufgabe der Erfindung

Die Aufgabe der vorliegenden Erfindung ist es, die Nachteile aus dem Stand der Technik zu überwinden. Insbesondere soll eine Vorrichtung und ein Verfahren bereitgestellt werden, die eine nur geringe Lärmemission aufweisen.

### Lösung der Aufgabe

Zur Lösung der Aufgabe führt, dass die Form durch zumindest einen Horizontalrüttler in horizontaler Richtung auf dem Träger bewegbar bzw. rüttelbar ist und dabei an einem seitlichen Anschlag anschlägt.

Durch das seitliche Anschlagen der Form an einem Anschlag wird ein abrupter und sehr harter Stopp der Formbewegung bewirkt, wobei sich die Bewegungsenergie auf die Schokolade überträgt. Diese schwappt in alle Ecken der Form, jedoch nicht über den Rand, da die Adhäsionskräfte der Form dies nicht zulassen. Dies gilt insbesondere für zähe Schokoladenmasse. Diese verbleibt in der Form oder den entsprechenden Alveolen der Form und tritt nicht über den Rand aus. Bewirkt wird aber eine intensive Homogenisierung und Verteilung der Masse in der Form und vor allem auch in den Ecken.

Vom Erfindungsgedanken wird jede mögliche Ausgestaltung eines Anschlags umfasst. Beispielsweise kann der Träger, auf dem die Form ruht bzw. transportiert wird, seitlich mit einer Aufkantung ausgestattet sein, gegen die die Form anschlägt. Bevorzugt wird allerdings ein separater seitlicher Führungsrahmen, bei dem vor allem auch ein Abstand zwischen Anschlag und Form eingestellt werden kann. In diesem Fall wird die Form mit geringem seitlichem Spiel zwischen den Führungsrahmen geführt. Beim seitlichen Bewegen, Vibrieren bzw. Rütteln wird dann dieses Spiel überbrückt und die Form gegen den Anschlag geschlagen. Unter geringem seitlichem Spiel wird beispielsweise ein Spiel von 0,5 bis 5 mm verstanden.

Damit beim Anschlagen der Form an dem Anschlag die Lärmemission auf ein Minimum reduziert wird, ist bevorzugt daran gedacht, in dem Anschlag einen Lärmabsorber zu integrieren. Dies kann beispielsweise ein in eine geometrisch beliebig geformte Schwalbenschwanz-Nut eingesetzter elastischer Streifen sein, der fest oder lose mit dem Anschlag verbunden ist. Beim Auftreffen der Form auf diesen Streifen findet dann auch keine oder nur eine geringe Lärmentwicklung statt, da der Streifen, obwohl er relativ hart sein kann, sich geringfügig in dem Anschlag bzw. in der Nut bewegt. Hierbei soll nicht unerwähnt bleiben, dass die Form durch die Rütteleinrichtung relativ schnell bewegt wird, die Frequenz liegt bei 0-1000 Hz.

Auch für den Horizontalrüttler bieten sich viele technische Möglichkeiten an. Bevorzugt wird ein Vibrator, beispielsweise ein Magnetvibrator aus einem Spulenteil und einem T-Stück, welches bei Anregung des Spulenteils von diesem angezogen wird. Hier sind aber viele Möglichkeiten denkbar und sollen vom Erfindungsgedanken umfasst sein.

Der Horizontalrüttler kann an dem Rütteltisch selbst oder aber auch an den seitlichen Führungsrahmen oder an beiden angeordnet sein. Wesentlich ist allein, dass die Form seitlich bewegt wird, sodass sie mit Wucht an dem seitlichen Anschlag anschlagen kann. Dabei sorgen natürlich entsprechende Puffer bzw. Kraftspeicher dafür, dass von der Bewegung des Rütteltisches bzw. der zeitlichen Führungsrahmen nicht zusätzlich eine Lärmemission ausgeht.

In einem bevorzugten Ausführungsbeispiel der Erfindung ist dem Träger aber auch eine vertikale Rütteleinrichtung zugeordnet. Das bedeutet, dass die Form sowohl in vertikaler als auch in horizontaler Richtung vibrieren kann, was zu einer sehr guten Homogenisierung der Produktmasse in den Alveolen der Form beiträgt.

Des Weiteren ist es möglich, dass die einzelnen Rüttler getrennt angesteuert werden, sodass zum Beispiel getrennt die horizontale Rüttelkomponente gegenüber der vertikalen Rüttelkomponente verändert werden kann, wenn dies gewünscht wird.

Wichtig ist aber auch die allseitig schwingende Abstützung des Trägers, die dazu führt, dass die Lärmbelastung wesentlich vermindert ist. Die Formen tanzen auf dem Träger, wobei auch hier beispielsweise durch eine Herabsetzung der vertikalen Rüttelkomponente ein Aufschlagen der Formen auf dem Träger verringert werden kann. In der Praxis hat sich herausgestellt, dass durch gezielte Ansteuerung der Rüttler eine Lärmbelastung auf ein Minimum herabgesetzt werden kann. Dies wird nochmals dadurch verbessert, wenn die Form auf einem beispielsweise textilen Band über den Rütteltisch bzw. über die elastischen Einlagen bewegt wird.

Bei dem Träger bzw. Rütteltisch handelt es sich beispielsweise um eine einfache Kunststoff- oder Metallplatte, die vertikal und horizontal über Kraftspeicher abgestützt ist. Bei den Kraftspeichern kann es sich um einfache Schraubenfedern handeln, denkbar sind aber auch andere elastische Puffer oder Federn. Hier soll die Erfindung keine Einschränkung aufweisen.

Die vertikale Rüttelkomponente wird von einem Vertikalrüttler übernommen, der beispielsweise unter oder über dem Rütteltisch angeordnet sein kann. Wichtig ist allein, dass er auf den Rütteltisch eine vertikale Rüttelkomponente ausübt. Für den Vertikalrüttler kommt jeder Antrieb infrage, der auf den Rütteltisch eine vibrierende Wirkung ausübt. Beispielsweise kann dies ein Vibrationsmotor, zum Beispiel ein Unwucht-Motor, sein. Denkbar ist aber auch ein entsprechender Magnetantrieb oder ein Druckluft-Kolben-Vibrator. Auf diese Ausführungen soll allerdings die vorliegende Erfindung nicht beschränkt sein

Von der vorliegenden Erfindung umfasst wird auch ein Verfahren zum Herstellen eines Produktes, welches zumindest aus einer fliessfähigen Masse besteht, die in eine Form eingefüllt und diese auf einem Träger vibriert bzw. gerüttelt wird, wobei die Form in horizontaler Richtung bewegt, vibriert bzw. gerüttelt wird und dabei an einem seitlichen Anschlag anschlägt.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
**Figur 1** eine perspektivische Ansicht eines Ausschnittes in Mittelposition aus einer Rüttelstation in einer Vorrichtung zum Herstellen eines Produktes, welches zumindest aus einer fliessfähigen Masse, insbesondere aus Schokolade, besteht;
**Figur 2** **A** eine Frontansicht der erfindungsgemässen Rüttelstation mit einer Form **in** Mittelposition;

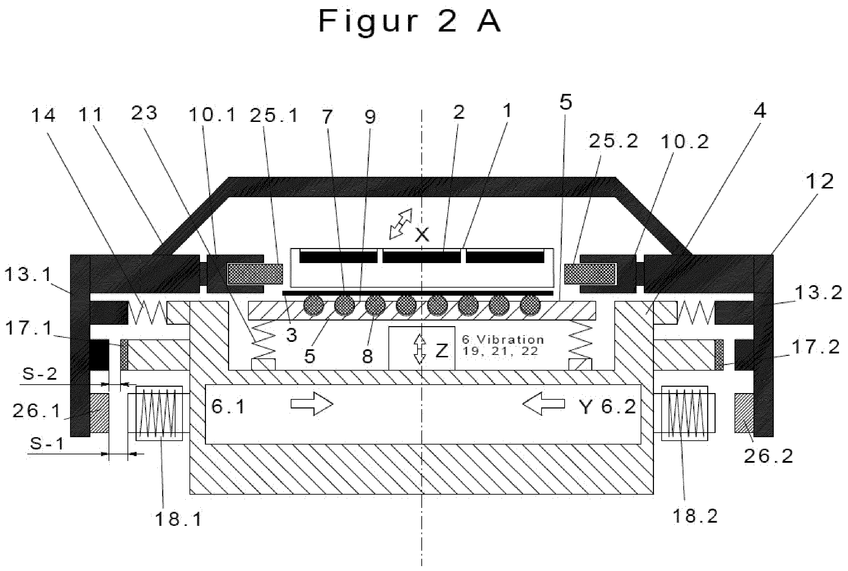

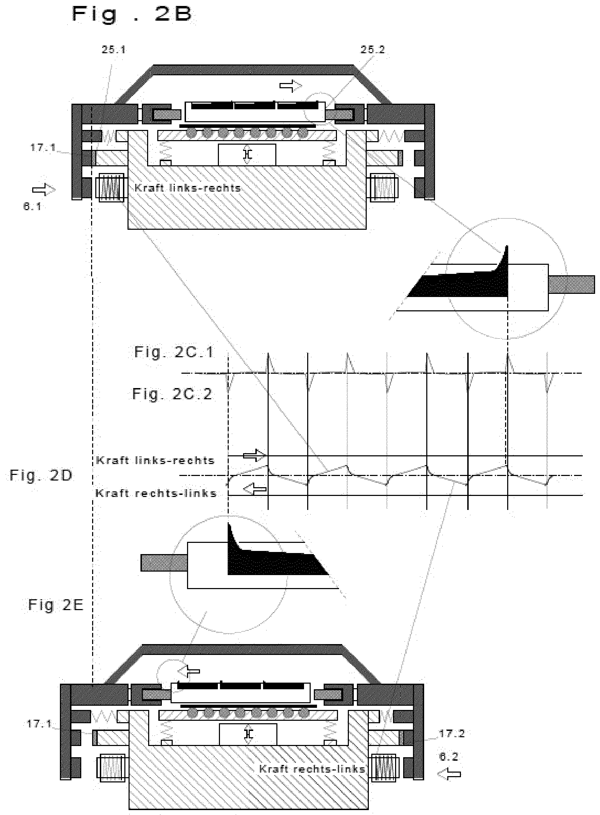

**Figur 2** **Beine** Frontansicht der Rüttelstation gemäss Figur 2A mit einer rechts anschlagenden Form mit einem vergrössert dargestellten Ausschnitt;
**Figur 2** **C.1** eine diagrammartige Darstellung des Aufpralls der Form auf die rechte **Leiste** mit dem entsprechenden Aufprall - Peak;
**Figur 2** **C.2** eine diagrammartige Darstellung des Aufpralls der Form auf die linke Leiste mit dem entsprechenden Aufprall - Peak;
**Figur 2** **D eine** diagrammartige Darstellung des Geschwindigkeitsverlaufs des **Horizontalrüttlers;**
**Figur 2** **E** eine Frontansicht der Rüttelstation gemäss Figur 2A mit einer links **anschlagenden** Form;

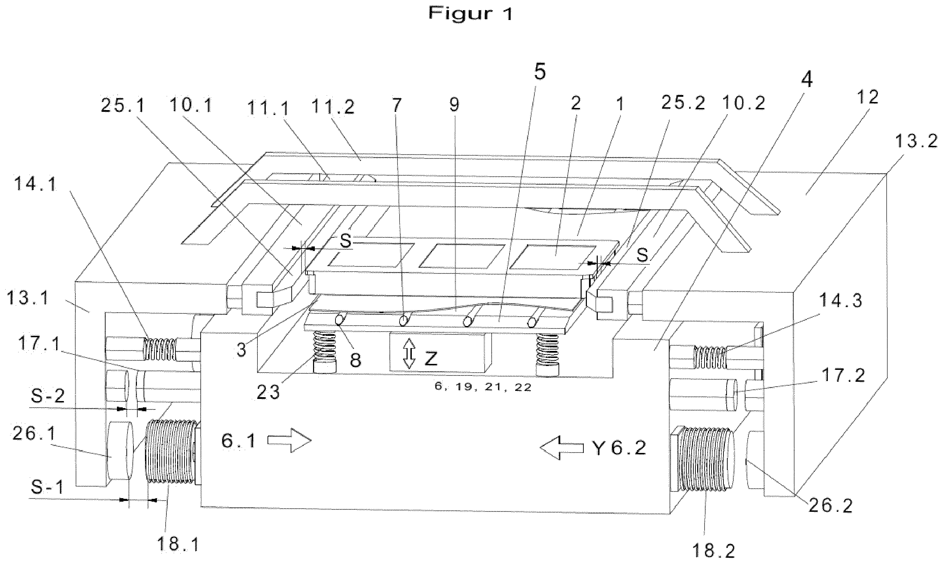

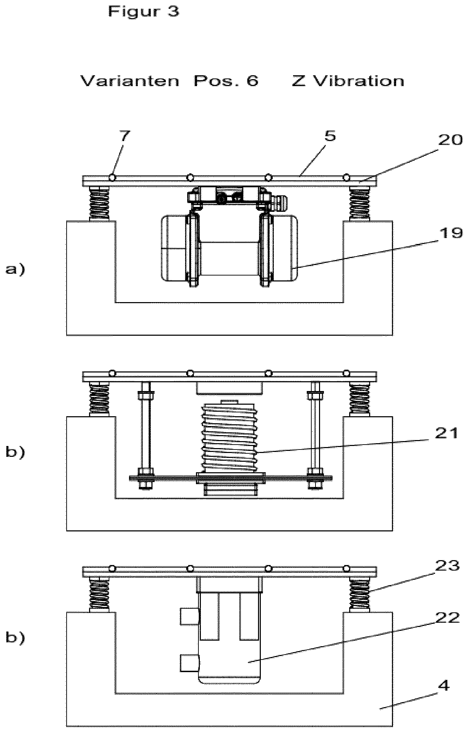

**Figur 3** eine Frontansicht eines Teils einer Rüttelstation gemäss den Figuren 1 und 2 mit verschiedenen Rüttelerzeugern.

Die Masse wird in einer nicht gezeigten vorhergehenden Station in eine Form 1 eingefüllt, wobei diese Form 1 entsprechende Hohlräume (Alveolen) 2 zur Aufnahme dieser fliessfähigen Masse aufweist.

Im gezeigten Ausführungsbeispiel liegt die Form 1 auf einem Transportband 3 auf und wird in Transportrichtung X durch eine nur teilweise angedeutete Rütteleinrichtung hindurch transportiert.

Die Rütteleinrichtung besteht aus einer Mehrzahl von einzelnen Maschinenkomponenten, die erfindungsgemäss zum horizontalen, gegebenenfalls aber auch zum vertikalen Bewegen, Vibrieren bzw. Rütteln der Form 1 zusammenwirken. Hierzu gehört ein Rahmengestell 4 und zwei Rahmen 13.1 und 13.2 mit jeweils einem seitlichen Führungsrahmen 10.1 und 10.2, die über zwei Traversen 11.1 und 11.2 miteinander verbunden sind. Zwischen diesen Führungsrahmen 10.1 und 10.2 werden die Formen 1 in die Transportrichtung X hindurch bewegt und auf einem Rütteltisch 5 vibriert. Dabei können sie auf dem Rütteltisch 5 vorwärts und seitlich "tanzen" und werden insbesondere von den Führungsrahmen 10.1 und 10.2 seitlich abgestützt bzw. schlagen an den Führungsrahmen 10.1 und 10.2 seitlich an.

Die Führungsrahmen 10.1 und 10.2 und Rahmen 13.1 und 13.2 bilden mit entsprechend nachfolgend beschriebenen Elementen einen Horizontalrüttler 12 aus. Diese Horizontalrüttler 12 bewegt die Führungsrahmen 10.1 und 10.2 in waagrechter Richtung Y, wie durch Pfeile 6.1 und 6.2 dargestellt.

Der Horizontalrüttler 12 besitzt den offenen linken und den offenen rechten Rahmen 13.1 bzw. 13.2, die sich über Schraubenfedern 14.1 und 14.2 gegen den Führungsrahmen 10.1 bzw. 10.2 abstützt. Die Vibration für den Rahmen 10.1 bzw. 10.2 wird allerdings durch einen oder zwei Magnetvibrator erzeugt, wobei ein Eisenkern 26.1 bzw. 26.2 mit einem Erregerspulenelement 18.1 bzw. 18.2 zusammenwirkt.

Nahe den Magnetvibratoren sind noch zwei Pufferelementen 17.1 und 17.2 vorgesehen.

In die Führungsrahmen 10.1 und 10.2 sind zu den Formen 1 hin Leisten 25.1 und 25.2 eingesetzt. Diese Leisten 25.1 und 25.2 sitzen bevorzugt in Nuten in den Führungsrahmen 10.1 und 10.2, wobei diese Nuten beispielsweise schwalbenschwanzartig ausgebildet sein können. In jedem Fall ist bevorzugt daran gedacht, dass sich die Leisten 25.1 und 25.2 in den Nuten geringfügig bewegen können, sodass sie auftreffenden Formen 1 in gewissem Umfang nachgeben und damit die Lärmemission beim Auftreffen der Formen 1 auf die Leisten 25.1 bzw. 25.2 mindern.

Zudem kann ein Spiel S, das die Leisten 25.1 und 25.2 zu den Formen 1 hin aufweisen, in gewissem Umfang eingestellt werden. Dieses Spiel S wird bevorzugt auch auf ein Spiel S1 zwischen dem Erregerspulenelement 18.1 bzw. 18.2 und dem Eisenkern 26.1 bzw. 26.2 sowie ein Spiel S2 in den Puffern 17.1 bzw. 17.2. Bevorzugt ist dieses Spiel S kleiner als das Spiel S1, welches wiederum kleiner als das Spiel S2 ist, sodass gewährleistet ist, dass bei Tätigkeit des Magnetvibrator 18.1/26.1 bzw. 18.2/26.2 bzw. wechselwirkend die Formen 1 gegen die Leisten 25.1 bzw. 25.2 geschlagen werden.

Ein weiterer Teil der Rütteleinrichtung, nämlich ein Vertikalrüttler, beaufschlagt einen Rütteltisch 5, der sich unterhalb des Transportbandes 3 befindet. Durch diesen Teil der Rütteleinrichtung werden entsprechende vertikale Vibrationen Z bzw. Stösse auf den Rütteltisch 5 und über diesen auf die Form 1 übertragen, so dass die fliessfähige Masse in den Alveolen 2 auch hierdurch homogenisiert werden kann.

Zwischen dem Rütteltisch 5 und der Form 1, in diesem gezeigten Ausführungsbeispiel getrennt durch das Transportband 3, befinden sich streifenförmige Auflagen 7. Ihre Anzahl wird durch die Breite der Form 1 bestimmt. Die Auflagen 7 sitzen in entsprechenden Nuten 8 des Rütteltisches 5 und überragen eine Oberfläche 9 des Rütteltisches 5 um ein vorbestimmtes Mass. Ferner sitzen sie in den Nuten 8 mit einem gewissen Spiel, was ebenfalls zur Lärmreduzierung beiträgt. Diese streifenförmigen Auflagen 7.1 bis 7.4 können einen beliebigen geometrischen Querschnitt aufweisen.

In Figur 3 werden verschiedene Möglichkeiten eines Vertikalrüttlers aufgezeigt. Bei dem Ausführungsbeispiel nach Figur 3a handelt es sich um einen Vibrationsmotor 19, der mit einem Untertisch 20 unter dem Rütteltisch 5 verbunden ist. In Figur 3b ist ein Magnetantrieb 21 skizziert und in Figur 3c ein Druckluft-Kolbenvibrator 22. In allen Fällen stützt sich der Rütteltisch 5 bzw. der Untertisch 20 über eine Mehrzahl von Schraubenfedern 23 oder elastische Federelemente oder Blattfedern (aus Stahl, Kunststoff, Fiberglas, Verbundwerkstoffe etc.) gegen ein Maschinengestell 24 ab.

### Die Funktionsweise der vorliegenden Erfindung ist folgende:

Nachdem die fliessfähige Masse, beispielsweise Schokolade, in die Form 1 bzw. die dort vorhandenen Alveolen 2 eingefüllt worden ist, gelangt die Form 1 auf dem Transportband 3 in den Bereich der Rütteleinrichtung. Die Rütteleinrichtung überträgt heftige Vibrationen bzw. Stösse, möglichst von allen Richtungen auf den Rütteltisch 5 und die Rahmen 13.1 und 13.2, wobei diese Vibrationen und Stösse auf die Form 1 übertragen werden. Die Form 1 ruht aber entweder direkt auf den streifenförmigen Auflagen 7.1 bis 7.4 oder über Zwischenschaltung des Transportbandes 3. Im ersten Fall sind die Vibrationen des Vertikalrüttlers so gesteuert, dass trotzdem ein Transport der Formen 1 in Transportrichtung X erfolgt. Im zweiten Fall erfolgt der Transport in Transportrichtung X über das Transportband 3.

Die streifenförmigen Auflagen 7.1 bis 7.4 haben die Auswirkung, dass eine Geräuschentwicklung, die durch das Aufschlagen der Form 1 auf dem Rütteltisch 5 bzw. dem Transportband 3 beim vertikalen Rütteln entsteht, fast gänzlich vermieden wird, so dass nicht mehr, wie bisher nach dem Stand der Technik, es zu einer unerträglichen Geräuschentwicklung kommt. Gleichzeitig wird auch die Form 1 wesentlich schonender behandelt, und das, obwohl die fliessfähige Masse in den Alveolen den gleichen Vibrationen ausgesetzt ist. Die Homogenisierung wird dadurch überhaupt nicht beeinträchtigt.

Das horizontale Rütteln, das im rechten Winkel oder schräg zur Transportrichtung X erfolgt, wird von dem Horizontalrüttler 12 (18.1,18.2/26.1,26.2) über das Rahmengestell 4/12 durchgeführt. Beim Überbrücken des Spiels S1 zwischen Erregerspulenelement 18 und Eisenkern 26 trifft nach kurzer Wegstrecke infolge des geringeren Spiels S die Leiste 25.1 auf die Form 1 und schleudert diese schlagartig gegen die Leiste 25.2. An der Leiste 25.2 stoppt die Form 1 ruckartig, sodass die fliessfähige Masse in der Alveole 2 in dieser nach rechts schwappt siehe vergrösserte Darstellung in Figur 2 B) und es auf diese Art und Weise zu einer seitlichen Homogenisierung und nicht nur, wie beim Stand der Technik bekannt, zu einer Homogenisierung in Richtung der Transportrichtung X kommt. Da die Leiste 25.2 aber nicht fest in der entsprechenden Nut sitzt, dämpft sie in gewissem Umfang den Schlag der Form 1, vor allem was die Geräuschentwicklung anbelangt. Diese wird auf ein Minimum reduziert.

Werden die Magnetvibratoren nun umgepolt, so erfolgt eine Beaufschlagung des Horizontalrüttlers 12 mit einer Kraft von rechts nach links, wie dies in Figur 2E gezeigt ist. Die Form 1 wird dabei gegen die Leiste 25.1 geschleudert, so dass die fliessfähige Masse nach links hochsteigt. Allerdings kommt es dabei nicht zu einem Austritt der Masse aus der Form bzw. Alveole 2, was vermutlich auf entsprechende Haftkräfte zurückzuführen ist.

Der obere Teil des Diagramms von Figur 2 C.1 zeigt den Schlag der Form beim Aufprall an der Leiste 25.2 mit dem entsprechenden Peak. Das Diagramm in Figur 2 C.2 stellt den Schlag der Form an der Leiste 25.1 links dar. Ebenso zeigt das Diagramm in Figur 2D den Geschwindigkeitsverlauf des Horizontalrüttlers 12 bei der Kraft von links nach rechts und im unteren Teil bei der Kraft von rechts nach links.

Die Schraubenfedern 14.1 und 14.2 sowie die Puffer 17.1 und 17.2 übernehmen ebenfalls ihre Aufgabe zur Dämpfung der Bewegung und der Geräuschentwicklung. Wenn vorliegend von Schraubenfedern gesprochen wird, so sind natürlich im Rahmen der Erfindung sämtliche bekannte Kraftspeicher umfasst.

### Bezugszeichenliste

| | | | |
|---|---|---|---|
| 1 | Form | 34 | |
| 2 | Hohlraum | 35 | |
| 3 | Transportband | 36 | |
| 4 | Rahmengestell | 37 | |
| 5 | Rütteltisch | 38 | |
| 6 | Vibration | 39 | |
| 7 | streifenförmige Auflage | 40 | |
| 8 | Nut | 41 | |
| 9 | Oberfläche von 5 | 42 | |
| 10 | Führungsrahmen | 43 | |
| 11 | Traversen | 44 | |
| 12 | Horizontalrüttler | 45 | |
| 13 | Rahmen | 46 | |
| 14 | Schraubenfeder | 47 | |
| 15 | Federstreifen | 48 | |
| 16 | | 49 | |
| 17 | Pufferelement | 50 | |
| 18 | Erregerspulenelement | 51 | |
| 19 | Vibrationsmotor | 52 | |
| 20 | Untertisch | 53 | |
| 21 | Magnetantrieb | 54 | |
| 22 | Druckluft-Kolbenvibrator | 55 | |
| 23 | Schraubenfeder | 56 | |
| 24 | Maschinengestell | 57 | |
| 25 | Leisten | 58 | |
| 26 | Eisenkern | 59 | |
| 27 | | 60 | |
| 28 | | | |
| 29 | | S | Spiel |
| 30 | | | |
| 31 | | X | Transportrichtung |
| 32 | | Y | waagrechte Vibration |
| 33 | | Z | vertikale Vibration |

## Patentansprüche

1. Vorrichtung zum Herstellen eines Produktes, welches zumindest teilweise aus einer fliessfähigen Masse besteht, die in eine Form (1) einfüllbar ist, wobei der Form (1) eine Vibrier -bzw. Rütteleinrichtung zugeordnet und die Form (1) auf einem Träger (3, 5) angeordnet ist,
**dadurch gekennzeichnet,**
**dass** die Form (1) durch zumindest einen Horizontalrüttler (12) in horizontaler Richtung auf dem Träger (3, 5) bewegbar bzw. rüttelbar ist und dabei an einem seitlichen Anschlag anschlägt.

2. Vorrichtung nach Anspruch 1, **dadurch gekennzeichnet, dass** der Träger ein Transportband (3) aufweist, welches über einem Rütteltisch (5) angeordnet ist.

3. Vorrichtung nach Anspruch 1 oder 2, **dadurch gekennzeichnet, dass** dem Träger (3, 5) bzw. der Form (1) ein seitlicher Führungsrahmen (10.1, 10.2) zugeordnet ist.

4. Vorrichtung nach wenigstens einem der vorhergehenden Ansprüche, **dadurch gekennzeichnet, dass** dem Träger (3, 5), d.h., dem Rütteltisch (5), und/oder dem seitlichen Führungsrahmen (10.1, 10.2) zumindest einseitig seitlich zumindest der Horizontalrüttler (12) zugeordnet ist.

5. Vorrichtung nach wenigstens einem der vorhergehenden Ansprüche, **dadurch gekennzeichnet, dass** in zumindest einem der Führungsrahmen (10.1, 10.2) eine zur Form (1) hin weisende Leiste (25.1, 25.2) integriert und diese schwingend in dem Führungsrahmen (10.1, 10.2) gelagert ist.

6. Vorrichtung nach wenigstens einem der vorhergehenden Ansprüche, **dadurch gekennzeichnet, dass** sich der Horizontalrüttler (12) über zumindest einen Kraftspeicher (14.1, 14.2) gegen den Rütteltisch (5) oder ein Rahmengestell (4) bzw. den seitlichen Führungsrahmen (10.1,10.2) abstützt.

7. Vorrichtung nach Anspruch 6, **dadurch gekennzeichnet, dass** dem Rahmengestell (4) bzw. dem seitlichen Führungsrahmen (10.1,10.2) zumindest ein Puffer (17.1, 17.2) zugeordnet ist.

8. Vorrichtung nach wenigstens einem der vorhergehenden Ansprüche, **dadurch gekennzeichnet, dass** in dem Horizontalrüttler (12.2) zumindest ein Vibrator (18.1,18.2/26.1,26.2) angeordnet ist.

9. Vorrichtung nach Anspruch 8, **dadurch gekennzeichnet, dass** ein Teil (26.1,26.2) des Vibrators in dem Rahmen (13.1,13.2) und ein anderer Teil (18.1,18.2) an dem Rütteltisch (5) bzw. dem Rahmengestell (4) angeordnet ist.

10. Vorrichtung nach wenigstens einem der vorhergehenden Ansprüche, **dadurch gekennzeichnet, dass** der Rahmen (13.1) über Traversen (11.1,11.2) mit dem gegenüberliegenden Rahmen (13.2) verbunden ist.

11. Vorrichtung nach Anspruch 10, **dadurch gekennzeichnet, dass** der Rahmen (13.1,13.2) über Kraftspeicher (14.1,14.2) gegen das Rahmengestell (4) abgestützt ist.

12. Vorrichtung nach Anspruch 11, **dadurch gekennzeichnet, dass** neben den Kraftspeichern (14.1,14.2) Puffer (17.1,17.2) zwischen Rahmen (13.1,13.2) und Rahmengestell (4) angeordnet sind.

13. Vorrichtung nach wenigstens einem der vorhergehenden Ansprüche, **dadurch gekennzeichnet, dass** der Träger (3,5) vertikal abgestützt ist und die vertikale Abstützung über Kraftspeicher erfolgt.

14. Vorrichtung nach wenigstens einem der vorhergehenden Ansprüche, **dadurch gekennzeichnet, dass** dem Träger (3,5) zumindest ein Vertikalrüttler (19, 21,22) zugeordnet ist.

15. Verfahren zum Herstellen eines Produktes, welches zumindest teilweise aus einer fliessfähigen Masse besteht, die in eine Form (1) eingefüllt und diese auf einem Träger (3, 5) vibriert bzw. gerüttelt wird, **dadurch gekennzeichnet, dass** die Form (1) in horizontaler Richtung bewegt, vibriert bzw. gerüttelt wird und dabei an einem seitlichen Anschlag anschlägt.

## Claims

1. Device for the production of a product which consists at least partly of a flowable mass which can be filled into a mould (1), wherein a vibrating or shaking device is assigned to the mould (1) and the mould (1) is placed on a carrier (3, 5),
**characterized in that**
the mould (1) can be moved or shaken in the horizontal direction on the carrier (3, 5) by at least one horizontal vibrator (12) and in the process strikes against a lateral stop.

2. Device according to claim 1, **characterized in that** the carrier comprises a conveyor belt (3) which is placed above a vibrating table (5).

3. Device according to claim 1 or 2, **characterized in that** a lateral guide frame (10.1, 10.2) is assigned to the carrier (3, 5) or the mould (1).

4. Device according to at least one of the preceding claims, **characterized in that** the carrier (3, 5), i.e. the vibrating table (5), and/or the lateral guide frame (10.1, 10.2) is assigned at least the horizontal vibrator (12) laterally at least on one side.

5. Device according to at least one of the preceding claims, **characterized in that** a strip (25.1, 25.2) pointing towards the mould (1) is integrated in at least one of the guide frames (10.1, 10.2) and is mounted in the guide frame (10.1, 10.2) in an oscillating manner.

6. Device according to at least one of the preceding claims, **characterized in that** the horizontal vibrator (12) is supported via at least one force accumulator (14.1, 14.2) against the vibrating table (5) or a frame rack (4) or the lateral guide frame (10.1, 10.2).

7. Device according to claim 6, **characterized in that** at least one buffer (17.1, 17.2) is assigned to the frame rack (4) or the lateral guide frame (10.1, 10.2).

8. Device according to at least one of the preceding claims, **characterized in that** at least one vibrator (18.1, 18.2/26.1, 26.2) is placed in the horizontal vibrator (12.2).

9. Device according to claim 8, **characterized in that** one part (26.1, 26.2) of the vibrator is arranged in the frame (13.1, 13.2) and another part (18.1, 18.2) is situated on the vibrating table (5) or the frame rack (4).

10. Device according to at least one of the preceding claims, **characterized in that** the frame (13.1) is connected via crossbars (11.1, 11.2) to the opposite frame (13.2).

11. Device according to claim 10, **characterized in that** the frame (13.1, 13.2) is supported against the frame rack (4) via force accumulators (14.1, 14.2).

12. Device according to claim 11, **characterized in that** buffers (17.1, 17.2) are placed between the frame rack (4) and the frame (13.1, 13.2) in addition to the force accumulators (14.1, 14.2).

13. Device according to at least one of the preceding claims, **characterized in that** the carrier (3, 5) is supported vertically and the vertical support is performed via force accumulators.

14. Device according to at least one of the preceding claims, **characterized in that** at least one vertical vibrator (19, 21, 22) is assigned to the carrier (3, 5).

15. Method for the production of a product which consists at least partly of a flowable mass which is filled into a mould (1) and this is vibrated or shaken on a carrier (3, 5), **characterized in that** the mould (1) is moved in a horizontal direction, and is vibrated or shaken and in the process hits against a lateral stop.

## Revendications

1. Dispositif permettant de fabriquer un produit, constitué au moins partiellement d'une masse fluide, qui peut être remplie dans un moule (1), dans lequel un dispositif de vibration ou de secouage est attribué au moule (1) et le moule (1) est disposé sur un support (3, 5),
**caractérisé en ce que**
le moule (1) peut être déplacé ou secoué en direction horizontale sur le support (3, 5) par l'intermédiaire d'au moins un secoueur horizontal (12) et vient alors buter contre une butée latérale.

2. Dispositif selon la revendication 1, **caractérisé en ce que** le support présente une bande de transport (3), qui est disposée sur une table de secouage (5).

3. Dispositif selon la revendication 1 ou 2, **caractérisé en ce qu'**un cadre de guidage latéral (10.1, 10.2) est attribué au support (3, 5) ou au moule (1).

4. Dispositif selon au moins l'une des revendications précédentes, **caractérisé en ce qu'**au moins le secoueur horizontal (12) est attribué latéralement, au moins d'un côté, au support (3,5), c'est-à-dire à la table de secouage (5) et/ou au cadre de guidage latéral (10.1, 10.2).

5. Dispositif selon au moins l'une des revendications précédentes, **caractérisé en ce que** dans au moins l'un des cadres de guidage (10.1, 10.2) une baguette (25.1, 25.2) orientée vers le moule (1) est intégrée et celle-ci est montée de manière oscillante dans le cadre de guidage (10.1, 10.2).

6. Dispositif selon au moins l'une des revendications précédentes, **caractérisé en ce que** le secoueur horizontal (12) s'appuie par l'intermédiaire d'au moins un accumulateur de force (14.1, 14.2) contre la table de secouage (5) ou un bâti de cadre (4) ou le cadre de guidage latéral (10.1, 10.2).

7. Dispositif selon la revendication 6, **caractérisé en ce qu'**au moins un tampon (17.1, 17.2) est attribué au bâti de cadre (4) ou au cadre de guidage latéral (10.1, 10.2).

8. Dispositif selon au moins l'une des revendications précédentes, **caractérisé en ce qu'**au moins un vibrateur (18.1, 18.2/26.1, 26.2) est disposé dans le secoueur horizontal (12.2).

9. Dispositif selon la revendication 8, **caractérisé en ce qu'**une partie (26.1, 26.2) du vibrateur est disposée dans le cadre (13.1, 13.2) et une autre partie (18.1, 18.2) est disposée sur la table de secouage (5) ou le bâti de cadre (4).

10. Dispositif selon au moins l'une des revendications précédentes, **caractérisé en ce que** le cadre (13.1) est relié au cadre opposé (13.2) par l'intermédiaire de traverses (11.1, 11.2).

11. Dispositif selon la revendication 10, **caractérisé en ce que** le cadre (13.1, 13.2) est soutenu contre le bâti de cadre (4) par l'intermédiaire d'accumulateurs de force (14.1, 14.2).

12. Dispositif selon la revendication 11, **caractérisé en ce que** en plus des accumulateurs de force (14.1, 14.2) des tampons (17.1, 17.2) sont disposés entre le cadre (13.1, 13.2) et le bâti de cadre (4).

13. Dispositif selon au moins l'une des revendications précédentes, **caractérisé en ce que** le support (3,5) est soutenu verticalement et le soutien vertical est assuré par l'intermédiaire d'accumulateurs de force.

14. Dispositif selon au moins l'une quelconque des revendications précédentes, **caractérisé en ce qu'**au moins un secoueur vertical (19, 21, 22) est attribué au support (3,5).

15. Procédé pour la fabrication d'un produit, qui est constitué au moins partiellement d'une masse fluide, qui est remplie dans un moule (1) et qui est amenée à vibrer et ou secouée sur un support (3, 5), **caractérisé en ce que** le moule (1) est déplacé, amené à vibré ou secoué dans la direction horizontale et vient alors buter contre une butée latérale.
